# EUROPEAN PATENT SPECIFICATION

(11) **EP 3 749 019 B1**
(45) Date of publication and mention of the grant of the patent: **19.10.2022**
(21) Application number: 20177996.4
(22) Date of filing: 03.06.2020
(51) Int. Cl.: H04W 48/02, H04W 36/30, H04W 36/18

(54) **VEHICLE COMMUNICATION DEVICE**
KOMMUNIKATIONSVORRICHTUNG FÜR EIN FAHRZEUG
DISPOSITIF DE COMMUNICATION DE VÉHICULE

(30) Priority: 04.06.2019 JP 2019104253
(43) Date of publication of application: 09.12.2020
(73) Proprietor: YAZAKI CORPORATION, Minato-ku, Tokyo 108-8333 (JP)
(72) Inventor: ITOU, Eita, Susono-shi, Shizuoka 410-1194 (JP); NISHIZAKI, Ryohei, Susono-shi, Shizuoka 410-1194 (JP)
(74) Representative: Grünecker Patent- und Rechtsanwälte PartG mbB

(56) References cited:
- EP-A1- 1 944 984
- WO-A1-2019/082432
- JP-A- 2009 284 113

## Description

The present invention relates to a vehicle communication device.

In related art, a communication device in which a Wi-Fi terminal is connected to a communication network via an access point is disclosed as a vehicle communication device in Japanese Patent No. 6479652, for example. In this communication device, information of signal strength with respect to a Wi-Fi terminal is shared among a plurality of access points. In a case where an access point with weak signal strength with respect to the Wi-Fi terminal is connected, communication with the Wi-Fi terminal is disconnected by a side of the access point and the Wi-Fi terminal is connected to a different access point. Accordingly, the communication device can secure communication quality between a Wi-Fi terminal and an access point.

WO 2019/082432 A1 relates to a wireless communication device of a vehicle, which comprises two wireless communication modules, wherein a transition from the first module connected to a first access point to the second module connected to a second access point is performed when the signal strength of the second access point exceeds the signal strength of the first access point.

EP 1 944 984 A1 relates to a portable wireless communication terminal capable of being operated in a first mode, where the terminal is connected to an access point, and a second mode, where the terminal is not connected to the access point, wherein, the terminal transitions from the first to the second mode when the signal strength drops below a threshold.

Incidentally, in the above-described communication device according to Japanese Patent No. 6479652, for example, there is a possibility that communication connection is interrupted between access points in a case where a Wi-Fi terminal moves between access points. Also, there is a possibility that a state in which radio field intensity of the Wi-Fi terminal with respect to an access point is low is kept in the communication device.

Thus, the present invention is provided in view of the foregoing, and is to provide a vehicle communication device capable of appropriately securing communication quality between a communication module and an access point.

This is achieved by the features of the independent claim. The dependent claims describe advantageous embodiments.

A vehicle communication device according to one aspect includes a first communication module and a second communication module that are mounted on a vehicle, are configured to wirelessly communicate with a plurality of access points for communication relay, and are of same communication standard as each other; and a controller that is configured to control the first communication module and the second communication module, wherein the controller is configured to control the first communication module and the second communication module on a basis of radio field intensity of the first communication module and the second communication module with respect to the plurality of access points, and a predetermined threshold, and prohibits connection of the first communication module and the second communication module with the access points in a case where the radio field intensity of the first communication module and the second communication module is lower than the threshold.

According to another aspect, in the vehicle communication device, it is possible to configure that the threshold is a value which is larger than a minimum value of radio field intensity that allows the first communication module and the second communication module to communicate with the access points and with which communication quality can be secured.

In the vehicle communication device, the controller is configured to control in such a manner that one of the first communication module and the second communication module is communicably connected to a first access point for communication relay and the other of the first communication module and the second communication module prepares for connection with a second access point for communication relay which access point is different from the first access point.

According to still another aspect, in the vehicle communication device, it is possible to configure that the controller is configured to perform control in such a manner that communication between the first communication module and the first access point is disconnected, the stand-by second communication module is communicably connected to the second access point, and the first communication module, communication of which is disconnected, searches for a different access point in a case where the radio field intensity of the first communication module with respect to the first access point becomes lower than the threshold when the first communication module is communicably connected to the first access point and the second communication module stands by for connection with the second access point.

In the vehicle communication device, the controller changes the threshold higher as the speed of the vehicle becomes higher.

According to still another aspect, in the vehicle communication device, it is possible to further include that a wide-area communication module that is configured to wirelessly communication in a wide area compared to the first communication module and the second communication module, wherein the controller configured to perform communication by the wide-area communication module in a case where connection of the first communication module and the second communication module with the access points is prohibited.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration example of a vehicle communication device according to an embodiment;
FIG. 2 is a schematic view illustrating an application example of the vehicle communication device according to the embodiment;
FIG. 3 is a schematic view illustrating a first application example of the vehicle communication device according to the embodiment;
FIG. 4 is a schematic view illustrating a second application example of the vehicle communication device according to the embodiment;
FIG. 5 is a schematic view illustrating a third application example of the vehicle communication device according to the embodiment; and
FIG. 6 is a flowchart illustrating an operation example of the vehicle communication device according to the embodiment.

### DETAILED DESCRIPTION OF THE PREFERRED EMBODIMENTS

A form to carry out the present invention (embodiment) will be described in detail with reference to the drawings. The present invention is not limited by contents described in the following embodiments. Also, components described in the following include what can be easily assumed by those skilled in the art, and what is substantially the same. Furthermore, configurations described in the following can be combined arbitrarily. Also, various kinds of omission, substitution, or changes can be made within the scope of the present invention.

### Embodiment

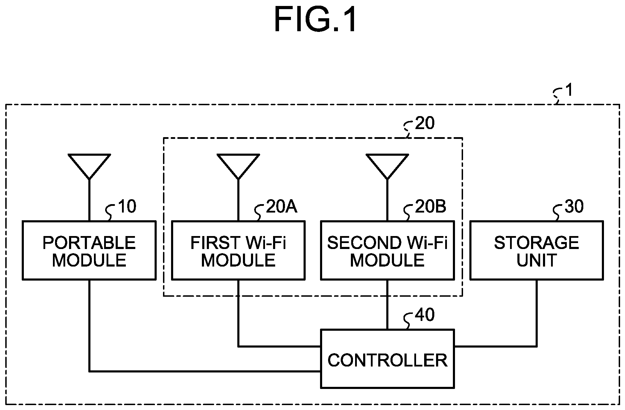

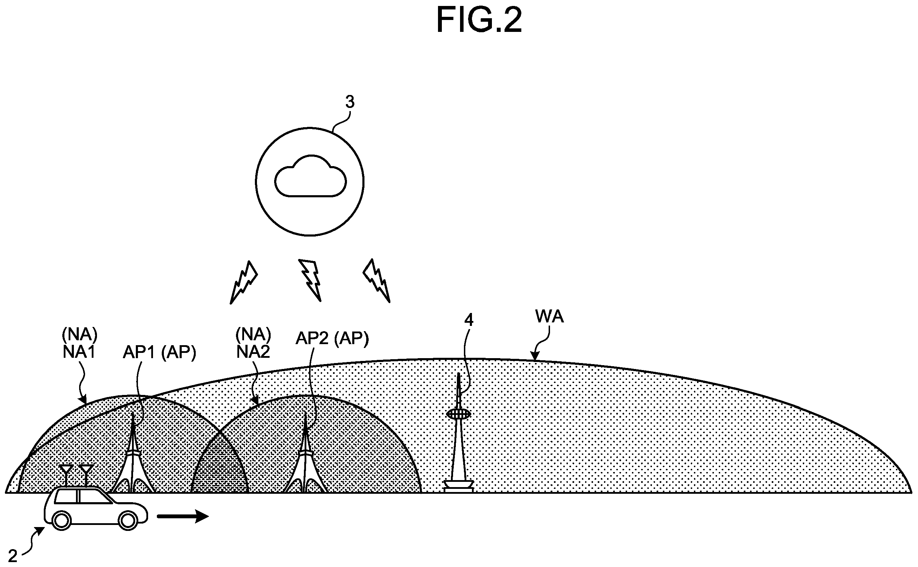

A vehicle communication device 1 according to the embodiment will be described with reference to the drawings. FIG. 1 is a block diagram illustrating a configuration example of the vehicle communication device 1 according to the embodiment. FIG. 2 is a schematic view illustrating an application example of the vehicle communication device 1 according to the embodiment. The vehicle communication device 1 is mounted on a vehicle 2 and is connected to an external communication network 3 via an access point AP for communication relay, or the like provided outside the vehicle 2. The vehicle communication device 1 includes a portable module 10 as a wide-area communication module, a wireless fidelity (Wi-Fi) module unit 20, a storage unit 30, and a controller 40, as illustrated in FIG. 1.

The portable module 10 is an electronic component capable of wireless communication. The portable module 10 can perform wireless communication in a wide area compared to the Wi-Fi module unit 20. The portable module 10 is adapted, for example, to a wireless communication standard (third generation mobile communication system) based on international mobile telecommunication (IMT)-2000, a wireless communication standard (fourth generation mobile communication system) based on an IMT-Advanced standard, and the like. The portable module 10 communicates with a base station 4 for communication relay (see FIG. 2). Here, the base station 4 is a relay base for connection to the external communication network 3 operated by a communication service provider or the like. The base station 4 communicates with the portable module 10 in an area WA wider than an area NA of an access point AP. That is, in the base station 4, the area WA that can be covered by each base station 4 is wider than the area NA that can be covered by each access point AP. Thus, the base station 4 can construct a communication network of the area WA wider than that of the access point AP. The portable module 10 transmits/receives a radio wave to/from the base station 4. The portable module 10 is connected to the controller 40 and outputs a reception signal received from the base station 4 to the controller 40. Also, the portable module 10 transmits a transmission signal output from the controller 40 to the base station 4.

The Wi-Fi module unit 20 includes a first Wi-Fi module 20A as a first communication module, and a second Wi-Fi module 20B as a second communication module. The first Wi-Fi module 20A is an electronic component capable of wireless communication. The first Wi-Fi module 20A is based on a standard of a wireless local area network (LAN) 5 and is connected to the external communication network 3 via the wireless LAN 5. The first Wi-Fi module 20A can wirelessly communicate with an access point AP included in the wireless LAN 5. Here, the access point AP is a relay base to make connection to the external communication network 3 via the wireless LAN 5. Each of a plurality of access points AP included in the wireless LAN 5 can communicate with the Wi-Fi module unit 20 in a covering area NA. The access point AP communicates with the Wi-Fi module unit 20 in the area NA narrower than the area WA of the base station 4 of the portable module 10. That is, each of the plurality of access points AP has a covering area NA narrower than an area WA that can be covered by each base station 4. The first Wi-Fi module 20A is connected to the controller 40, and outputs a reception signal received from an access point AP to the controller 40. Also, the first Wi-Fi module 20A transmits a transmission signal output from the controller 40 to an access point AP.

The second Wi-Fi module 20B is a communication module of the same communication standard as the first Wi-Fi module 20A. The second Wi-Fi module 20B is based on a standard of the wireless LAN 5, and is connected to the external communication network 3 via the wireless LAN 5. The second Wi-Fi module 20B can wirelessly communicate with an access point AP included in the wireless LAN 5. The second Wi-Fi module 20B is connected to the controller 40, and outputs a reception signal received from the access point AP to the controller 40. Also, the second Wi-Fi module 20B transmits a transmission signal output from the controller 40 to the access point AP.

The storage unit 30 is an electronic component that stores data. The storage unit 30 stores conditions and information necessary for various kinds of processing in the controller 40, various programs and applications executed by the controller 40, control data, and the like. Then, the storage unit 30 also stores access point information, which is information related to an access point AP, and map data. As the access point information, for example, a service set identifier (SSID), a password, a security method, a frequency (ch), and the like are registered for each access point AP. The SSID is an identifier to identify the access point AP. The password is information for permitting connection to the access point AP. The security method is a method of encrypting communication between the Wi-Fi module unit 20 and the access point AP, and includes, for example, WEP, WPA, WPA2, and the like. The frequency (ch) is a frequency used for communication between the Wi-Fi module unit 20 and the access point AP. As for the frequency (ch), the same frequency channel is used for communication between the Wi-Fi module unit 20 and access points AP. The access point information stored in the storage unit 30 is updated as appropriate. The storage unit 30 is connected to the controller 40, and the controller 40 reads such information as needed.

The controller 40 controls the portable module 10 and the Wi-Fi module unit 20. The controller 40 is connected to the portable module 10, and a reception signal output from the portable module 10 is input thereto. Also, the controller 40 outputs a transmission signal to the portable module 10. The controller 40 is connected to the Wi-Fi module unit 20, and a reception signal output from the Wi-Fi module unit 20 is input thereto. Also, the controller 40 outputs a transmission signal to the Wi-Fi module unit 20. The controller 40 is connected to the storage unit 30, writes various kinds of information into the storage unit 30, and reads various kinds of information from the storage unit 30. The controller 40 reads, for example, the access point information stored in the storage unit 30, and is connected to an access point AP via the Wi-Fi module unit 20 on the basis of the access point information.

The controller 40 is connected to the access point AP on the basis of radio field intensity (received radio field intensity) of the first Wi-Fi module 20A and the second Wi-Fi module 20B with respect to the access point AP, and a predetermined threshold. Here, the threshold is a value indicating radio field intensity (dBm), and is a value which is larger than a minimum value of radio field intensity that allows the first Wi-Fi module 20A and the second Wi-Fi module 20B to communicate with an access point AP and with which communication quality can be secured. That is, the threshold is a value with which the first Wi-Fi module 20A and the second Wi-Fi module 20B can communicate with the access point AP without interruption in communication.

As for the radio field intensity of the first Wi-Fi module 20A and the second Wi-Fi module 20B with respect to the access point AP, there is a tendency that radio waves of a plurality of access points AP interfere with each other and the radio field intensity fluctuates. Thus, in a case of determining the closest access point AP, the controller 40 preferably uses an average value or a median value in a certain period as the radio field intensity of the first Wi-Fi module 20A and the second Wi-Fi module 20B instead of an instantaneous value. Accordingly, even in a case where radio waves of the plurality of access points AP interfere with each other and the radio field intensity fluctuates, the controller 40 can stably determine the closest access point AP.

On the basis of radio field intensity of each of the Wi-Fi modules 20A and 20B and a threshold, the controller 40 performs control in such a manner that one of the first Wi-Fi module 20A and the second Wi-Fi module 20B is communicably connected to a first access point AP1 and the other of the first Wi-Fi module 20A and the second Wi-Fi module 20B prepares for connection with a second access point AP2 different from the first access point AP1.

For example, the controller 40 performs control in such a manner that one of the first Wi-Fi module 20A and the second Wi-Fi module 20B is communicably connected to the first access point AP1 and the other of the first Wi-Fi module 20A and the second Wi-Fi module 20B stands by for connection with the found second access point AP2 in a case where the radio field intensity of each of the Wi-Fi modules 20A and 20B is equal to or higher than the threshold.

On the other hand, the controller 40 performs control in such a manner that communication connection between one of the first Wi-Fi module 20A and the second Wi-Fi module 20B and the first access point AP1 is disconnected and standing by for connection with the second access point AP2 found by the other of the first Wi-Fi module 20A and the second Wi-Fi module 20B is canceled in a case where the radio field intensity of each of the Wi-Fi modules 20A and 20B becomes lower than the threshold. That is, the controller 40 prohibits connection to access points by the first Wi-Fi module 20A and the second Wi-Fi module 20B in a case where the radio field intensity of the first Wi-Fi module 20A and the second Wi-Fi module 20B is lower than the threshold.

The controller 40 performs control in such a manner that communication between the first Wi-Fi module 20A and the first access point AP1 is disconnected, the stand-by second Wi-Fi module 20B is communicably connected to the second access point AP2, and the first Wi-Fi module 20A, communication of which is disconnected, searches for a different access point AP in a case where the radio field intensity of the first Wi-Fi module 20A with respect to the first access point AP1 becomes lower than the threshold when the first Wi-Fi module 20A is communicably connected to the first access point AP1 and the second Wi-Fi module 20B stands by for connection with the second access point AP2.

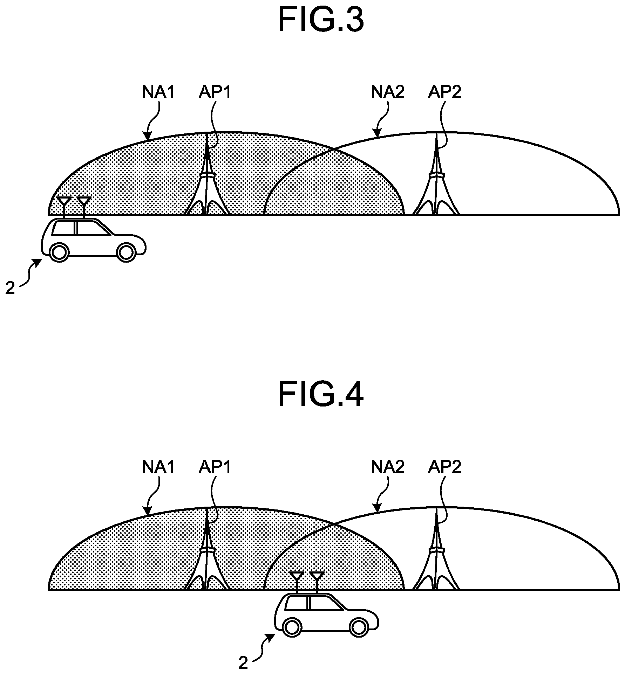

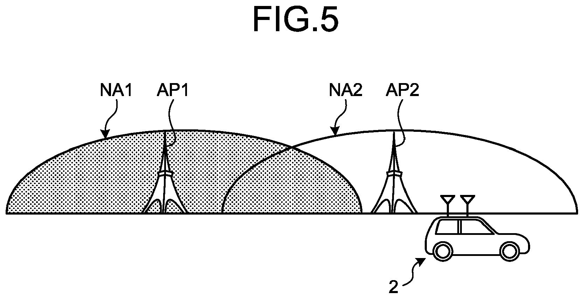

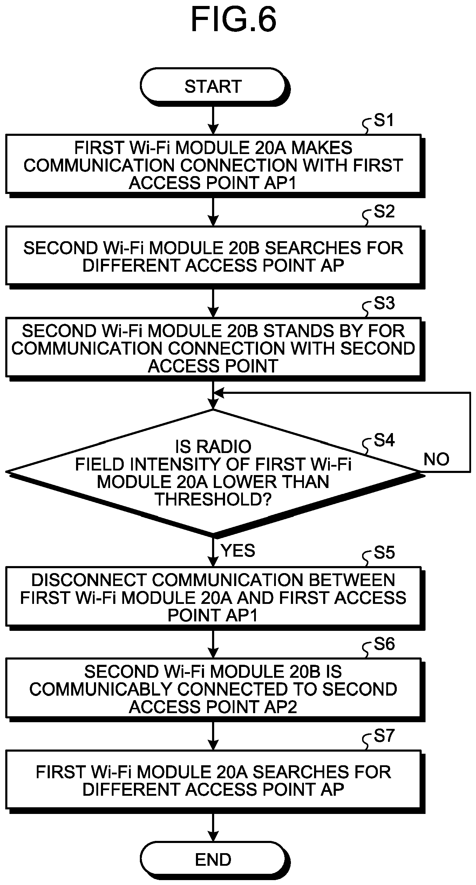

Next, an operation example of the vehicle communication device 1 will be described. FIG. 3 is a schematic view illustrating a first application example of the vehicle communication device 1 according to the embodiment. FIG. 4 is a schematic view illustrating a second application example of the vehicle communication device 1 according to the embodiment. FIG. 5 is a schematic view illustrating a third application example of the vehicle communication device 1 according to the embodiment. FIG. 6 is a flowchart illustrating an operation example of the vehicle communication device 1 according to the embodiment. An ignition (IG) power of the vehicle communication device 1 is turned on, and the vehicle communication device 1 is activated.

The vehicle 2 is traveling in an area of an area NA1 covered by a first access point AP1, for example, as illustrated in FIG. 3. That is, the vehicle 2 belongs to the area NA1 where the Wi-Fi module unit 20 can communicate with the first access point AP1. Here, for example, the controller 40 is communicably connected to the first access point AP1 by the first Wi-Fi module 20A, and transmits or receives a signal (actual data such as moving image) (Step S1).

Next, the controller 40 searches for an access point AP different from the first access point AP1 by the second Wi-Fi module 20B (Step S2). The controller 40 searches for a communicable access point AP via the second Wi-Fi module 20B. The controller 40 is connected to a corresponding access point AP among a plurality of access points AP included in the access point information stored in the storage unit 30, for example. Since the controller 40 is connected to the access point AP which is included in the predetermined access point information and safety of which is secured, security can be improved. For example, as illustrated in FIG. 4, when entering an area NA2 in which communication with a second access point AP2 included in the access point information is possible, the second Wi-Fi module 20B receives a signal (beacon) periodically transmitted from the second access point AP2. After receiving the beacon, the second Wi-Fi module 20B checks with the second access point AP2 whether an SSID is appropriate. When the SSID is confirmed, the second Wi-Fi module 20B requests the second access point AP2 for authentication for connection to the second access point AP2. The second access point AP2 authenticates the connection of the second Wi-Fi module 20B by a predetermined authentication method. When the connection to the second access point AP2 is authenticated, the second Wi-Fi module 20B gives a connection request to the second access point AP2 (association request). When the association request is permitted by the second access point AP2, the second Wi-Fi module 20B stands by for communication connection with the second access point AP2 (Step S3).

Next, the controller 40 compares the radio field intensity of the first Wi-Fi module 20A with respect to the first access point AP1 with the threshold, and determines whether the radio field intensity of the first Wi-Fi module 20A with respect to the first access point AP1 is lower than the threshold (Step S4). In the controller 40, for example, as illustrated in FIG. 5, the radio field intensity of the first Wi-Fi module 20A with respect to the first access point AP1 becomes lower than the threshold in a case where the vehicle 2 is traveling in an area of the area NA2 covered by the second access point AP2 (Step S4; Yes). Here, the controller 40 disconnects the communication between the first Wi-Fi module 20A and the first access point AP1 (Step S5), and communicably connects the second Wi-Fi module 20B standing by for communication connection in a state, in which the radio field intensity is equal to or higher than the threshold, to the second access point AP2 (Step S6). Then, the controller 40 controls the first Wi-Fi module 20A, communication of which is disconnected, to search for a different access point AP (Step S7).

Note that in a case where the vehicle 2 is placed outside the area NA of the access point AP (out of range) and connection of the first Wi-Fi module 20A and the second Wi-Fi module 20B with the access point AP is prohibited, the controller 40 performs communication by the portable module 10. For example, in a case where the radio field intensity of both of the first Wi-Fi module 20A and the second Wi-Fi module 20B is lower than the threshold, the controller 40 disconnects communication performed by selective utilization of the first Wi-Fi module 20A or the second Wi-Fi module 20B, and performs communication by the portable module 10. Then, the controller 40 disconnects the communication performed by utilization of the portable module 10 and restarts the communication performed by selective utilization of the first Wi-Fi module 20A or the second Wi-Fi module 20B in a case where the radio field intensity of at least one of the first Wi-Fi module 20A and the second Wi-Fi module 20B becomes equal to or higher than the threshold. That is, in a case where both of the Wi-Fi modules 20A and 20B and the portable module 10 can communicate, the controller 40 prioritizes the communication performed by selective utilization of the Wi-Fi module 20A or 20B over the communication performed by utilization of the portable module 10.

As described above, the vehicle communication device 1 according to the embodiment includes the first Wi-Fi module 20A, the second Wi-Fi module 20B, and the controller 40. The first Wi-Fi module 20A and the second Wi-Fi module 20B are mounted on the vehicle 2, can wirelessly communicate with a plurality of access points AP for communication relay, and are of the same communication standard as each other. The controller 40 controls the first Wi-Fi module 20A and the second Wi-Fi module 20B on the basis of the radio field intensity of the first Wi-Fi module 20A and the second Wi-Fi module 20B with respect to the plurality of access points AP, and a predetermined threshold. The controller 40 prohibits connection of the first Wi-Fi module 20A and the second Wi-Fi module 20B with the access points in a case where the radio field intensity of the first Wi-Fi module 20A and the second Wi-Fi module 20B is lower than the threshold.

With this configuration, the vehicle communication device 1 can actively disconnect connection with an access point AP having relatively low radio field intensity even in a communicable situation, and can switch connection to an access point AP with high radio field intensity quickly compared to related art. Accordingly, the vehicle communication device 1 can suppress connection kept in a state of low radio field intensity. Since the vehicle communication device 1 includes two communication modules in order to prevent interruption of communication at a boundary of an area NA of an access point AP, there is a strong tendency that connection is kept in a state of low radio field intensity compared to a case where one communication module is mounted. Thus, it is particularly effective that the vehicle communication device 1 actively disconnects connection with an access point AP having low radio field intensity. As a result, the vehicle communication device 1 can appropriately secure communication quality between a Wi-Fi module unit 20 and an access point AP.

In the above-described vehicle communication device 1, a threshold is a value which is larger than a minimum value of radio field intensity that allows the first Wi-Fi module 20A and the second Wi-Fi module 20B to communicate the access points AP, and with which communication quality can be secured. With this configuration, the vehicle communication device 1 can actively disconnect connection with an access point AP having relatively low radio field intensity even in a communicable situation, and can switch connection to an access point AP with high radio field intensity quickly compared to related art. As a result, the vehicle communication device 1 can appropriately secure communication quality between a Wi-Fi module unit 20 and an access point AP.

In the vehicle communication device 1, the controller 40 performs control in such a manner that one of the first Wi-Fi module 20A and the second Wi-Fi module 20B is communicably connected to the first access point AP1 for communication relay and the other of the first Wi-Fi module 20A and the second Wi-Fi module 20B prepares for connection with the second access point AP2 for communication relay which access point is different from the first access point AP1. With this configuration, in a case where communication between the first Wi-Fi module 20A and the first access point AP1 is disconnected in traveling at a boundary of an area NA of an access point AP, communication connection with the neighboring second access point AP2 can be performed smoothly and interruption of the communication can be suppressed in the vehicle communication device 1.

The controller 40 performs control in such a manner that communication between the first Wi-Fi module 20A and the first access point AP1 is disconnected, the stand-by second Wi-Fi module 20B is communicably connected to the second access point AP2, and the first Wi-Fi module 20A, communication of which is disconnected, searches for a different access point AP in a case where the radio field intensity of the first Wi-Fi module 20A with respect to the first access point AP1 becomes lower than the threshold when the first Wi-Fi module 20A is communicably connected to the first access point AP1 and the second Wi-Fi module 20B stands by for connection with the second access point AP2. With this configuration, the vehicle communication device 1 can suppress interruption of communication in movement at a boundary of an area NA of an access point AP.

The vehicle communication device 1 includes the portable module 10 that can perform wireless communication in a wide area compared to the first Wi-Fi module 20A and the second Wi-Fi module 20B. In a case where connection of the first Wi-Fi module 20A and the second Wi-Fi module 20B with access points AP is prohibited, the controller 40 performs communication by using the portable module 10. With this configuration, the vehicle communication device 1 can prioritize communication performed with high radio field intensity by the portable module 10 over communication performed with low radio field intensity by the first Wi-Fi module 20A and the second Wi-Fi module 20B. As a result, communication quality can be appropriately secured.

A controller 40 changes a threshold indicating radio field intensity according to a speed of a vehicle 2. The controller 40 makes a threshold higher as a speed of a vehicle 2 becomes higher. For example, the controller 40 makes a threshold of a case where the speed of the vehicle 2 is 50 km/h higher than a threshold of a case where the speed of the vehicle 2 is 20 km/h. With this configuration, in a case where the speed of the vehicle 2 is relatively high, the vehicle communication device 1 can more quickly switch connection to an access point AP having high radio field intensity, and can suppress interruption of communication.

### Modification example

Next, a modification example of the embodiment will be described. Although an example in which a vehicle communication device 1 includes a portable module 10 has been described, this is not a limitation and the portable module 10 may not be included. Also, a vehicle communication device 1 may include a different kind of communication module in addition to a portable module 10, or may include a different kind of communication module instead of the portable module 10.

The vehicle communication device according to the present embodiment prohibits connection of first and second communication modules to an access point in a case where radio field intensity of the first and second communication modules is lower than a threshold. Thus, connection with an access point having relatively low radio field intensity can be actively disconnected even in a communicable situation, and connection can be switched to an access point having high radio field intensity quickly compared to related art. As a result, the vehicle communication device can appropriately secure communication quality between each communication module and an access point.

Although the invention has been described with respect to specific embodiments for a complete and clear disclosure, the invention is not to be thus limited thereto, but is to be construed as embodying all modifications that may occur to one skilled in the art without departing from the scope of the appended claims.

## Claims

1. A vehicle communication device (1) comprising:
a first communication module (20A) and a second communication module (20B) that are mounted on a vehicle (2), are configured to wirelessly communicate with a plurality of access points (AP), and are of a same communication standard; and
a controller (40) that is configured to control the first communication module (20A) and the second communication module (20B), wherein
the controller (40) is configured to control the first communication module (20A) and the second communication module (20B) on a basis of radio field intensity of the first communication module (20A) and the second communication module (20B) with respect to the plurality of access points (AP),
**characterized in that**
the controller (40) is configured to control the first communication module (20A) and the second communication module (20B) further on a basis of a predetermined threshold, and to prohibit connection of the first communication module (20A) and the second communication module (20B) with the access points (AP) in a case where the radio field intensity of the first communication module (20A) and the second communication module (20B) is lower than the threshold, wherein
the controller (40) is configured to control in such a manner that one of the first communication module (20A) and the second communication module (20B) is communicably connected to a first access point (AP1) and the other of the first communication module (20A) and the second communication module (20B) prepares for connection with a second access point (AP2) which access point is different from the first access point (AP1), and
the controller (40) is configured to change the threshold higher as a speed of the vehicle (2) becomes higher.

2. The vehicle communication device (1) according to claim 1, wherein
the threshold is a value which is larger than a minimum value of radio field intensity that allows the first communication module (20A) and the second communication module (20B) to communicate with the access points (AP) and with which communication quality can be secured.

3. The vehicle communication device (1) according to claim 1 or 2, wherein
the controller (40) is configured to perform control in such a manner that communication between the first communication module (20A) and the first access point (AP1) is disconnected, the stand-by second communication module (20B) is communicably connected to the second access point (AP2), and the first communication module (20A), communication of which is disconnected, searches for a different access point (AP) in a case where the radio field intensity of the first communication module (20A) with respect to the first access point (AP1) becomes lower than the threshold when the first communication module (20A) is communicably connected to the first access point (AP1) and the second communication module (20B) stands by for connection with the second access point (AP2).

4. The vehicle communication device (1) according to any one of claims 1 to 3, further comprising:
a wide-area communication module (10) that is configured to wirelessly communicate in a wide area compared to the first communication module (20A) and the second communication module (20B), wherein
the controller (40) is configured to perform communication by the wide-area communication module (10) in a case where connection of the first communication module (20A) and the second communication module (20B) with the access points (AP) is prohibited.

## Patentansprüche

1. Fahrzeug-Kommunikationsvorrichtung (1), die umfasst:
ein erstes Kommunikationsmodul (20A) sowie ein zweites Kommunikationsmodul (20B), die an einem Fahrzeug (2) angebracht sind, so ausgeführt sind, dass sie drahtlos mit einer Vielzahl von Zugangspunkten (AP) kommunizieren, und den gleichen Kommunikationsstandard haben; sowie
eine Steuerungseinrichtung (40), die so ausgeführt ist, dass sie das erste Kommunikationsmodul (20A) und das zweite Kommunikationsmodul (20B) steuert, wobei
die Steuerungseinrichtung (40) so ausgeführt ist, dass sie das erste Kommunikationsmodul (20A) und das zweite Kommunikationsmodul (20B) auf Basis von Funkfeldstärke des ersten Kommunikationsmoduls (20A) und des zweiten Kommunikationsmoduls (20B) in Bezug auf die Vielzahl von Zugangspunkten (AP) steuert,
**dadurch gekennzeichnet, dass**
die Steuerungseinrichtung (40) so ausgeführt ist, dass sie das erste Kommunikationsmodul (20A) und das zweite Kommunikationsmodul (20B) weiter auf Basis eines vorgegebenen Schwellenwertes steuert, und
Verbindung des ersten Kommunikationsmoduls (20A) und des zweiten Kommunikationsmoduls (20B) mit den Zugangspunkten (AP) dann unterbindet, wenn die Funkfeldstärke des ersten Kommunikationsmoduls (20A) und des zweiten Kommunikationsmoduls (20B) unter dem Schwellenwert liegt, wobei
die Steuerungseinrichtung (40) so ausgeführt ist, dass sie so steuert, dass das erste Kommunikationsmodul (20A) oder das zweite Kommunikationsmodul (20B) kommunizierend mit einem ersten Zugangspunkt (AP1) verbunden wird und sich das andere von dem ersten Kommunikationsmodul (20A) und dem zweiten Kommunikationsmodul (20B) für Verbindung mit einem zweiten Zugangspunkt (AP2) vorbereitet, wobei sich dieser Zugangspunkt von dem ersten Zugangspunkt (AP1) unterscheidet, und
die Steuerungseinrichtung (40) so ausgeführt ist, dass sie den Schwellenwert erhöht, wenn sich eine Geschwindigkeit des Fahrzeugs (2) erhöht.

2. Fahrzeug-Kommunikationsvorrichtung (1) nach Anspruch 1, wobei
der Schwellenwert ein Wert ist, der größer ist als ein Minimalwert der Funkfeldstärke, der es dem ersten Kommunikationsmodul (20A) sowie dem zweiten Kommunikationsmodul (20B) ermöglicht, mit den Zugangspunkten (AP) zu kommunizieren, und mit dem Kommunikationsqualität gesichert werden kann.

3. Fahrzeug-Kommunikationsvorrichtung (1) nach Anspruch 1 oder 2, wobei
die Steuerungseinrichtung (40) so ausgeführt ist, dass sie Steuerung so durchführt, dass Kommunikation zwischen dem ersten Kommunikationsmodul (20A) und dem ersten Zugangspunkt (AP1) unterbrochen wird, das zweite Kommunikationsmodul (20B) im Bereitschaftszustand kommunizierend mit dem zweiten Zugangspunkt (AP2) verbunden ist und das erste Kommunikationsmodul (20A), dessen Kommunikation unterbrochen ist, einen anderen Zugangspunkt (AP) sucht, wenn die Funkfeldstärke des ersten Kommunikationsmoduls (20A) in Bezug auf den ersten Zugangspunkt (AP1) unter den Schwellenwert fällt, wenn das erste Kommunikationsmodul (20A) kommunizierend mit dem ersten Zugangspunkt (AP1) verbunden ist und sich das zweite Kommunikationsmodul (20B) in Bereitschaft für Verbindung mit dem zweiten Zugangspunkt (AP2) befindet.

4. Fahrzeug-Kommunikationsvorrichtung (1) nach einem der Ansprüche 1 bis 3, die des Weiteren umfasst:
ein Weitbereichs-Kommunikationsmodul (10), das so ausgeführt ist, dass es im Vergleich zu dem ersten Kommunikationsmodul (20A) und dem zweiten Kommunikationsmodul (20B) in einem weiten Bereich drahtlos kommuniziert, wobei
die Steuerungseinrichtung (40) so ausgeführt ist, dass sie Kommunikation über das Weitbereichs-Kommunikationsmodul (10) dann durchführt, wenn Verbindung des ersten Kommunikationsmoduls (20A) und des zweiten Kommunikationsmoduls (20B) mit den Zugangspunkten (AP) unterbunden wird.

## Revendications

1. Dispositif de communication de véhicule (1) comprenant :
un premier module de communication (20A) et un deuxième module de communication (20B) qui sont montés sur un véhicule (2), sont configurés pour communiquer sans fil avec une pluralité de points d'accès (AP), et suivent la même norme de communication ; et
un contrôleur (40) qui est configuré pour contrôler le premier module de communication (20A) et le deuxième module de communication (20B), dans lequel
le contrôleur (40) est configuré pour contrôler le premier module de communication (20A) et le deuxième module de communication (20B) sur la base d'une intensité de champ radio du premier module de communication (20A) et du deuxième module de communication (20B) par rapport à la pluralité de points d'accès (AP),
**caractérisé en ce que**
le contrôleur (40) est configuré pour contrôler le premier module de communication (20A) et le deuxième module de communication (20B) sur la base en outre d'un seuil prédéterminé, et pour éviter une connexion du premier module de communication (20A) et du deuxième module de communication (20B) avec les points d'accès (AP) dans le cas où l'intensité de champ radio du premier module de communication (20A) et du deuxième module de communication (20B) est inférieure au seuil, dans lequel
le contrôleur (40) est configuré pour contrôler de telle manière qu'un module parmi le premier module de communication (20A) et le deuxième module de communication (20B) est connecté en communication au premier point d'accès (AP1), et l'autre module parmi le premier module de communication (20A) et le deuxième module de communication (20B) prépare une connexion avec un deuxième point d'accès (AP2), ledit point d'accès étant différent du premier point d'accès (AP1), et
le contrôleur (40) est configuré pour relever le seuil lorsque la vitesse du véhicule (2) augmente.

2. Dispositif de communication de véhicule (1) selon la revendication 1, dans lequel
le seuil est à une valeur qui est supérieure à une valeur minimale de l'intensité de champ radio qui permet au premier module de communication (20A) et au deuxième module de communication (20B) de communiquer avec les points d'accès (AP) et avec laquelle une qualité de communication peut être assurée.

3. Dispositif de communication de véhicule (1) selon la revendication 1 ou 2, dans lequel
le contrôleur (40) est configuré pour mettre en œuvre un contrôle de telle manière que la communication entre le premier module de communication (20A) et le premier point d'accès (AP1) est déconnectée, le deuxième module de communication (20B) en veille est connecté en communication avec le deuxième point d'accès (AP2), et le premier module de communication (20A), dont la communication est déconnectée, cherche un point d'accès différent (AP) dans le cas où l'intensité de champ radio du premier module de communication (20A) par rapport au premier point d'accès (AP1) devient inférieure au seuil quand le premier module de communication (20A) est connecté en communication au premier point d'accès (AP1) et le deuxième module de communication (20B) prend en charge la connexion avec le deuxième point d'accès (AP2).

4. Dispositif de communication de véhicule (1) selon l'une quelconque des revendications 1 à 3, comprenant en outre :
un module de communication en zone étendue (10) qui est configuré pour communiquer sans fil dans une zone étendue par rapport au premier module de communication (20A) et au deuxième module de communication (20B), dans lequel
le contrôleur (40) est configuré pour mettre en œuvre une communication par le module de communication en zone étendue (10) dans le cas où une connexion du premier module de communication (20A) et du deuxième module de communication (20B) avec les points d'accès (AP) est interdite.
